# EUROPÄISCHE PATENTANMELDUNG

(11) **EP 2 711 599 A2**
(43) Veröffentlichungstag der Anmeldung: **26.03.2014**
(21) Anmeldenummer: 13184542.2
(22) Anmeldetag: 16.09.2013
(51) Int. Cl.: F16L 59/14, F16L 59/02

(54) **Wärmegedämmte Rohrleitung**

(30) Priorität: 19.09.2012 DE 202012009010 U
(71) Anmelder: Bohle Isoliertechnik GmbH, 51645 Gummersbach (DE)
(72) Erfinder: Frank, Thomas, 51702 Bergneustadt (DE)
(74) Vertreter: von Kreisler Selting Werner

(57) **Zusammenfassung**

Gegenstand der Neuerung ist eine wärmegedämmte hochtemperaturfluidführende Rohrleitung, die beispielsweise im Kraftwerksbau eingesetzt wird. Die Wärmedämmung umfasst wenigstens eine faserverstärkte Silica-Aerosol-Isolationsmatte, die mit einer Trag- und/oder Stützkonstruktion mit der Oberfläche der Leitung flächig in Kontakt gebrach ist.

## Beschreibung

Gegenstand der Neuerung ist eine wärmegedämmte hochtemperaturfluidführende Rohrleitung, die beispielsweise im Kraftwerksbau eingesetzt wird.

Dämmungen von hochtemperaturfluidführenden Rohrleitungen, im Allgemeinen auch als heißgehende Leitungen im Kraftwerksbau bezeichnet, werden in einem seit vielen Jahren bewährten Standard ausgeführt.

Leistungsfähige Dämmstoffe werden auf den Leitungen aufgelegt, bzw. befestigt. Hierbei werden Dämmdicken bis über 300 mm in mehrlagig fugenversetztem Aufbau hergestellt. Sie sorgen für die Einhaltung der gewünschten Wärmestromdichte, die ein Maß für den Wärmeverlust an den gedämmten Teilen ist. Eine geeignete Trag- und Stützkonstruktion hält den Oberflächenschutz aus Blech am Objekt, das heißt der Rohrleitung. Dieser Oberflächenschutz hat die Aufgabe, den Dämmstoff während der Nutzungszeit der Anlage vor Beschädigungen und sonstigen schädlichen Einflüssen zu schützen.

Da in Kraftwerken bis heute vergleichsweise hohe Wärmeverluste akzeptiert werden, spielt hier immer auch die Betrachtung der Oberflächentemperatur auf dem Blechmantel eine mitentscheidende Rolle für die Funktionsfähigkeit des Dämmsystems.

Aufgrund der beengten Platzverhältnisse und anderer baulicher oder betriebsbedingter Zwänge müssen Dämmungen an vielen Stellen abweichend von diesem Standard mit geringer Dicke ausgeführt werden: Hierzu gehört beispielsweise der Verzicht auf Dämmvermögen oder aber der Einsatz höherwertiger und in der Verarbeitung schwierigerer Dämmstoffe.

Die Aufgabe der vorliegenden Neuerung besteht in der Bereitstellung von hochwirksamen Dämmaufbauten mit den darin eingesetzten Produkten. Die Aufgabe der vorliegenden Neuerung besteht weiterhin in der Bereitstellung eines verbesserten Dämmsystems aus Dämmstoff, Trag- und Stützkonstruktion sowie dem entsprechenden Oberflächenschutz, der auf die jeweiligen Bedürfnisse angepasst werden kann.

Die vorgenannte Aufgabe wird in einer ersten Ausführungsform der Neuerung gelöst durch eine wärmegedämmte hochtemperaturfluidführende Rohrleitung, die dadurch gekennzeichnet ist, dass die Wärmedämmung wenigstens eine faserverstärkte Silica-Aerogel-Isolationsmatte umfasst, die mit Spannbändern mit der Oberfläche der Leitung flächig in Kontakt gebracht ist.

Hochtemperaturfluidführende Rohrleitungen im Sinne der vorliegenden Neuerung umfassen beispielsweise Frischdampfleitungen mit Durchmessern im Bereich von 10 cm bis 50 cm, die beispielsweise horizontal montiert sein können. Eine typische Mediumtemperatur des Fluids, beispielsweise Wasserdampf beträgt 530 °C.

Während eine übliche Dämmung aus Mineralfasermatten eine Dämmungsschichtdicke von 160 mm umfasst, ist es mit Hilfe der vorliegenden Neuerung möglich, faserverstärkte Silica-Aerogel-Isolationsmatten mit einer Gesamtdicke von 70 mm einzusetzen. Hieraus ergibt sich eine starke Reduktion des Umfangs des Dämmaufbaus, so dass sowohl bei der entsprechenden Stütz- oder Tragkonstruktionen als auch bei dem Blechmantel ein deutlicher Minderverbrauch zu verzeichnen ist.

Faserverstärkte Silica-Aerogel-Isolationsmatten sind im Handel beispielsweise unter der Bezeichnung Pyrogel^{®}XT erhältlich. Dieses Material besteht aus einer Hochtemperatur-Isolationsmatte aus Silica-Aerogel mit aussteifender Faserstruktur. Die Zusammensetzung erlaubt hervorragende Feuerschutzanwendungen. Silica-Aerogele, wie sie auch im Sinne der vorliegenden Neuerung eingesetzt werden, besitzen die niedrigste Wärmeleitfähigkeit aller bekannten Festkörper.

In einer bevorzugten Ausführungsform der vorliegenden Neuerung umfasst damit die Rohrleitung eine Frischdampfleitung, insbesondere einer Fluidtemperatur von bis zu 650 °C.

Die neuerungsgemäß einzusetzende faserverstärkte Silica-Aerogel-Isolationsmatte wird üblicherweise in einer Schichtdicke im Bereich von 5 bis 10 mm hergestellt und dieser Form Stoß auf Stoß oder auch Stoß-überlappend um die entsprechende Rohrleitung gewickelt.

Je nach Bedarf der Dämmung können auch mehrere Lagen, fugenversetzt, übereinander gelegt werden, so dass beispielsweise eine Dämmung, die 5 bis 10 Lagen der Isolationsmatte mit einer Gesamtdicke von 25 mm bis 100 mm aufweist, um eine Leitung gewickelt werden können.

In einer weiteren Ausführungsform der vorliegenden Erfindung ist es darüber hinaus auch möglich, dass die äußere Oberfläche der äußeren Isolationsmatte mit einer handelsüblichen Dämmung, beispielsweise aus Steinwolle bedeckt ist. Hierdurch lassen sich Kombinationswirkungen der faserverstärkten Silica-Aerogel-Isolationsmatte mit denen üblicher Dämmungen wie Steinwolle kombinieren.

Zur Befestigung der Isolationsmatte mit der Rohrleitung sind Trag-und/oder Stützkonstruktionen erforderlich. Stützkonstruktionen im Sinne der Neuerung umfassen beispielsweise die Ummantelung der Rohrleitung im Abstand der Dämmdicke vom Objekt. Sie können nur in einer Ebene wirkende Druckkräfte übertragen. Beispielhaft sind neben Spannbändern auch Blechmäntel im Sinne der Neuerung einsetzbar. Sie sind dämmtechnisch bedingte Wärmebrücken.

Dem gegenüber umfassen die Stützkonstruktionen im Sinne der Neuerung Konstruktionen, die die Ummantelung im vorgegebenen Abstand vom Objekt halten, wenn der Dämmstoff diese Aufgaben nicht übernehmen kann.

Stützkonstruktionen können nur senkrecht zur Objekt- bzw. Dämmoberfläche wirkende Kräfte übertragen. Sie sind ebenfalls Wärmebrücken, soweit sie nicht aus Dämmstoffen mit annähernd gleicher Dämmwirkung hergestellt werden können oder sich nicht auf den Dämmstoff abstützen.

Auf verschiedenen Teststrecken in einem Braunkohlekraftwerk wurden unterschiedliche Dämmaufbauten aufgebracht. Sie waren so gewählt, dass sie untereinander zum Teil ähnliche wärmetechnische Eigenschaften besitzen. Verglichen wurden die handwerklichen Aspekte der Montage, die Möglichkeiten der Vorrichtung und Standardisierung. Temperaturmessungen wurden durchgeführt, um die praktisch erreichten Werte den theoretisch ermittelten gegenüberzustellen. Das Verhalten nach längerer Temperatureinwirkung wurde beurteilt.

### Teststrecke 1: (konventionell)

Frischdampfleitung, DN 250, horizontal, Mediumtemperatur ca. 530 °C Dämmaufbau:
Dämmung aus 2 x 80 mm Mineralfasermatten Rockwool ProRox^{®} WM 80
Tragkonstruktion Flachstahl 30 x 3, L = 160 mm, mit Stützring, verzinkt, vernietet, mit thermischer Trennung; Oberflächenschutz Stahlblech, verzinkt, 1,0 mm.

### Teststrecke 2:

Frischdampfleitung, DN 250, horizontal, Mediumtemperatur ca. 530 °C Dämmaufbau:
Vordämmung aus ca. 40 mm Pyrogel^{®} XT, gewickelt in 4 Lagen á 10 mm, mit Spannbändern gehalten.
Dämmung aus 2 x 60 mm Mineralfasermatten Rockwool ProRox^{®} WM 80
Ohne Tragkonstruktion; Oberflächenschutz Stahlblech, verzinkt, 1,0 mm

### Teststrecke 3:

Frischdampfleitung, DN 250, horizontal, Mediumtemperatur ca. 530 °C Dämmaufbau:
Dämmung aus 70 mm Pyrogel^{®} XT, gewickelt in 7 Lagen á 10 mm, mit Spannbändern gehalten.
Ohne Tragkonstruktion; Oberflächenschutz Stahlblech, verzinkt, 1,0 mm

Ziel war es ein breiteres Spektrum an wirtschaftlich und technisch geeigneten Dämmsystemen anbieten zu können, das dem Anlagenbetreiber Zusatznutzen bietet:
Die Dämmwirkung der neuerungsgemäßen Teststrecken wurde verbessert, das heißt der Wärmeverlust der gedämmten Anlagenteile konnte reduziert werden. Bei gleichem Wärmeverlust konnten geringere Dämmdicken die Anzahl der betriebsbedingten Abflachungen und Sonderdämmungen reduzieren. Die Fläche des Blechmaterials und damit die Wärme abgebende Fläche wurde kleiner; auch in diesem Fall sank der Gesamtwärmeverlust. Blech wurde gespart und damit auch das Gesamtgewicht reduziert.

Erste Beurteilungen des Temperaturverhaltens zeigten eine gleichmäßige Temperaturverteilung über Länge und Umfang der Teststrecken.

Weitere Beurteilungen des Temperaturverhaltens nach mehreren Monaten zeigten ebenfalls eine gleichmäßige Temperaturverteilung über Länge und Umfang der Teststrecken.

Die Messungen mit Kontaktthermometer und Thermografie zeigten die folgende Tendenz:
Teststrecke 2 zeigte tendenziell ca. 5 °C niedrigere Oberflächentemperaturen als der gleichdicke Dämmaufbau in der Referenzstrecke mit konventioneller Dämmung.

Teststrecke 3 lieferte annähernd gleiche Oberflächentemperaturen wie die Teststrecke.

Beim nächsten Anlagenstillstand wurden die Teststrecken abisoliert, um Verhalten und Zustand der Dämmbauten näher beurteilen zu können.

Inhomogenitäten und unerwünschte Temperaturprofile konnten nicht erkannt werden. Hinweise auf fehlende Dauerhaftigkeit gab es nicht.

Der Einsatz von faserverstärkter Silica-Aerogel-Isolationsmatte als Dämmung oder Kombinationsdämmung ist daher prinzipiell geeignet, sowohl die Oberflächentemperaturen als auch die Wärmeverluste thermischer Anlagen zu verringern und damit im Sinne der Kunden zu verbessern.

## Patentansprüche

1. Wärmegedämmte hochtemperaturfluidführende Rohrleitung, **dadurch gekennzeichnet, dass** die Wärmedämmung wenigstens eine faserverstärkte Silica-Aerogel-Isolationsmatte umfasst, die mit einer Trag- und/oder Stützkonstruktion mit der Oberfläche der Leitung flächig in Kontakt gebracht ist.

2. Leitung nach Anspruch 1, **dadurch gekennzeichnet, dass** diese eine Frischdampfleitung, insbesondere einer Fluidtemperatur von bis zu 650 °C umfasst.

3. Leitung nach Anspruch 1 oder 2, **dadurch gekennzeichnet, dass** die Matte eine Schichtdicke im Bereich von 5 bis 10 mm aufweist.

4. Leitung nach einem der Ansprüche 1 bis 3, **dadurch gekennzeichnet, dass** die Dämmung 5 bis 10 Lagen der Isolationsmatte aufweist, die um die Leitung gewickelt sind.

5. Leitung nach einem der Ansprüche 1 bis 4, **dadurch gekennzeichnet, dass** die äußere Oberfläche der äußeren Isolationsmatte mit einer handelsüblichen Dämmung aus Steinwolle bedeckt ist.

6. Leitung nach einem der Ansprüche 1 bis 5, **dadurch gekennzeichnet, dass** die Tragkonstruktion Spannbänder umfasst.
